# EUROPÄISCHE PATENTSCHRIFT

(11) **EP 1 476 510 B1**
(45) Veröffentlichungstag und Bekanntmachung des Hinweises auf die Patenterteilung: **07.10.2009**
(21) Anmeldenummer: 03737235.6
(22) Anmeldetag: 20.01.2003
(51) Int. Cl.: C09D 5/18, C09K 21/12, B27K 3/52

(54) **BRANDSCHUTZMITTEL**
FIREPROOFING AGENT
AGENT IGNIFUGE

(30) Priorität: 05.02.2002 DE 10204765
(43) Veröffentlichungstag der Anmeldung: 17.11.2004
(73) Patentinhaber: Bauer, Wulf, 50968 Köln (DE)
(72) Erfinder: THÖNE, Gerd, 32105 Bad Salzuflen (DE)
(74) Vertreter: Bauer, Wulf
(86) Internationale Anmeldenummer: PCT/DE2003/000150
(87) Internationale Veröffentlichungsnummer: WO 2003/066748

(56) Entgegenhaltungen:
- WO-A-93/13176
- GB-A- 2 139 639
- US-A- 4 229 329

## Beschreibung

Die Erfindung bezieht sich auf ein Brandschutzmittel nach dem Oberbegriff des Patentanspruchs 1. Ein derartiges Brandschutzmittel ist aus GB-A-2139639 bekannt. Auch die WO-A-93/13176 zeigt ein entsprechendes Brandschutzmittel.

Bekannt sind Brandschutzmittel, die in einer wässrigen, dünnflüssigen Lösung u.a. ein Phosphat enthalten. Bei dem Brandschutzmittel nach der DE 402 33 10 A wird die brandschützende Wirkung im wesentlichen durch Intumeszenz erreicht, also Ausbildung eines die Wirkung des Feuers abweisenden Schaums unter Brandeinwirkung. Die Schrift bezieht sich auf Karbonisierungsschäume, es wird ausgeführt, dass die Karbonisierung durch Phosphorverbindungen begünstigt wird. Die Phosphate sind somit zur Unterstützung der Karbonisierung, nicht aber als primäre Brandschutzmittel beschrieben.

DE 300 09 104 C3 geht von u.a. durch Phosphorverbindungen feuerhemmend ausgerüsteten Epoxydharzmischungen aus und kritisiert, dass kein ausreichend langer Feuerschutz erreichbar ist. Im Patent werden zusätzlich Bestandteile beschrieben, die dann zu dem gewünschten, verbesserten Feuerschutz führen.

Die Erfindung hat es sich zur Aufgabe gemacht, das Brandschutzmittel der eingangs genannten Art zu verbessert und ein einfach herstellbares und einfach anwendbares Brandschutzmittel an zugegeben, dass sowohl bei der Löschung von Feuer als Feuerlöschflüssigkeit eingesetzt werden kann als auch prophylaktisch auf brennbare Gegenstände aufgetragen werden kann, sodass diese feuerhemmend ausgerüstet sind.

Diese Aufgabe wird gelöst durch die Merkmal des Anspruchs 1.

Die Erfindung macht sich den Umstand zunutze, dass bekanntlicherweise bei der Synthese von Phosphaten aus Phosphorsäure und einem entsprechendem Reaktionspartner, beispielsweise bei der Synthese von Diammoniumphosphat aus Wasser, Phosphorsäure und Ammoniak erheblich Wärme freigesetzt wird. Dem gemäß verläuft die Rückreaktion endotherm, es wird erhebliche Wärme benötigt. Dies kann man dazu nutzen, brennende Stoffe herunter zu kühlen.

Nun hat es sich aber überraschend bei Versuchen heraus gestellt, dass eine normale, wässrige Lösung von Diammoniumphosphaten nicht die gewünschte Abkühlung beim Zersetzen unter Einwirkung einer feuerbedingten Temperatur, die typisch zwischen 400°C und 1000°C liegt, liefert. Erst der Zusatz eines Netzmittels, insbesondere eines Tensids, brachte den gewünschten Erfolg. Es konnte festgestellt werden, dass erheblich Kälte freigesetzt wird, die das brennende Gut herab kühlt.

Die Zugabe eines Netzmittels hat bei der feuerfesten Ausrüstung von brennbaren Gegenständen den großen Vorteil, dass die Benetzung der Oberfläche des zu schützenden Gegenstandes verbessert wird. Trägt man lediglich eine wässrige Lösung eines Phosphats auf die zu schützenden Oberflächen, beispielsweise Holzoberflächen, auf, stellt man fest, dass die aufgesprühte Salzlösung nach Antrocknen Kristalle bildet. Ein homogener, geschlossener Überzug wird nicht erreicht, vielmehr nur ein partieller Schutz, der nicht zufriedenstellend ist.

Die Beigabe eines Netzmittels bringt nun aber den Erfolg. Beim Trockenen der aufgebrachten wässrigen Phosphatlösung bilden sich nicht mehr Kristalle, sondern es bleibt eine dünne, deckende Schicht des Phosphatträgers auf dem zu schützenden Gegenstand. Dadurch wird die feuerhemmende Ausrüstung deutlich verbessert.

Das erfindungsgemäße Brandschutzmittel hat den großen Vorteil, ausgesprochen umweltfreundlich zu sein. Phosphate sind bekanntlich Düngemittel. Wenn sie im Außenbereich verwendet werden und durch Regen teilweise oder gänzlich abgewaschen werden, richten sie keinen Schaden an.

Weiterhin wird kein spezielles Lösungsmittel benutzt, vielmehr wird Wasser eingesetzt. Auch in so weit ist das erfindungsgemäße Brandschutzmittel ausgesprochen umweltfreundlich.

Die Erfindung bezieht sich nicht vorrangig auf solche Phosphate, die unter Zufuhr von Wärme einen Schaum bilden, also intumeszierende Eigenschaften haben. Sie bezieht sich auf solche Phosphate, bei denen die beschriebene endotherme Zersetzungsreaktion auftritt.

Bei der Bekämpfung eines Brandherdes hat das erfindungsgemäße Brandschutzmittel als Löschflüssigkeit hervorragende Eigenschaften. Es ist flüssiger als Wasser. Die brennenden Gegenstände werden besser benetzt. Insbesondere aber verdampft die Löschflüssigkeit nicht so wie normales Löschwasser bei hohen, feuerbedingten Temperaturen: Es ist bekannt, dass aufgesprühtes normales Löschwasser bei Brandtemperaturen von mehr als 400°C verdampft, bevor das Löschwasser den zu benetzenden brennenden Gegenstand erreicht, das Wasser hat also verringerte Löschwirkung. Es kann sich bei sehr hohen Temperaturen sogar in Wasserstoff und Sauerstoff zerlegen. Beim Aufsteigen in kühlere Regionen können Wasserstoff und Sauerstoff wieder zu Knallgas verbrennen, was das Feuer anfacht, also der beabsichtigten Löschwirkung zuwider läuft.

Bei der erfindungsgemäßen Löschflüssigkeit wird der zu löschende Gegenstand durch die endotherme Reaktion herunter gekühlt und Löschwasser verdampft nicht in dem Maße, wie dies bei normalem Wasser beobachtet wird. Die brennenden Gegenstände lassen sich daher besser benetzen und somit auch besser löschen.

Mit dem Brandschutzmittel imprägnierte Gegenstände werden beim Anzünden gekühlt und brennen einfach schlechter, sie lassen sich nicht so einfach entzünden.

Nun sind aber wie oben beschrieben Phosphate und deren Salze wasserlöslich. Bei Anwendung im Außenbereich zur feuerhemmenden Ausrüstung von Gegenständen, beispielsweise Holzaußenflächen, werden die aufgebrachten Schichten nach und nach durch Regenwasser wieder abgewaschen. Dies ist nachteilig. Die Erfindung schlägt daher vor, zusätzlich einen Schauminhibitor der Brandschutzflüssigkeit hinzu zugeben. Hier werden insbesondere Silikonentschäumer eingesetzt. Verwendet wird vorzugsweise ein Feststoffanteil an Schauminhibitoren im Bereich von 0,1 bis 5 Gewichts-Prozent.

Die Schauminhibitoren verhindern nicht nur das Schäumen des Brandschmtzmittels, sodass dieses die zu schützenden oder zu löschenden Gegenstände besser benetzt, sondern haben auch eine wasserabweisende Wirkung. Sie behindern das Ablösen der aufgetragenen, angetrockneten Schicht des Brandschutzmittels durch Wasser oder Regen.

Insgesamt bilden sich auf der Oberfläche von Gegenständen, die mit dem Brandschutzmittel ausgerüstet sind, dünne, zähe Filme in Form einer geschlossenen Schicht. Diese Filme sind gegen Wasser beständig, jedenfalls deutlich beständiger als Filme ohne Zugabe eines Netzmittels.

Für die vorzugsweise als Schauminhibitoren eingesetzten Silikonentschäumer ist zwar bekannt, dass Silikon eine wasserabweisende Wirkung hat, es war aber nicht vorauszusehen und ist überraschend, dass bei dem erfindungsgemäßen Brandschutzmittel die Zugabe eines Silikonentschäumers oder eines anderen Schauminhibitors eine deutliche verbesserte Wetterfestigkeit bewirkt.

Neben Silikonentschäumern eignen sich als Schauminhibitoren auch Stearate wie beispielsweise Aluminiumstearat oder Zinkstearat.

Als Phosphat eignet sich für die Erfindung insbesondere das bereits erwähnt Diammoniumphosphat, weiterhin Diammoniumhydrogenphosphat, Guanidinphosphat, Dimelaminphosphat, Borphosphat, Dinatriumphosphat und Kuperhydroxyphosphat.

Einige dieser Phosphate haben die zusätzliche Wirkung, bei Zufuhr von Wärme aufzuschäumen, also eine intumeszierende Wirkung. Dies gilt beispielsweise für Dimelaminphosphat. Diese Wirkung tritt zusätzlich zu den bereits beschriebenen Wirkungen, also insbesondere der endothermen Reaktion unter Anwesenheit des Netzmittels, und der weiteren Vorteile die das Netzmittel bringt, auf.

In einer bevorzugten Ausführung ist das Netzmittel in einem Gewichtsanteil von 0,01 bis 1 Prozent in wässrigen Lösungen enthalten.

Der gewichtsmäßige Wasseranteil im erfindungsgemäßen Brandschutzmittel liegt über 50 %, vorzugsweise zwischen 62 und 95%, insbesondere bei 70 bis 80%. Das Brandschutzmittel ist ausgesprochen flüssig, es kann wie Wasser aufgetragen werden, insbesondere und vorzugsweise in Form eines feinen Nebels, wie er beispielsweise mit einer Zerstäuberspritze erreicht wird.

Bevorzugt wird das erfindungsgemäße Brandschutzmittel hergestellt aus einem so wenig Wasser wie möglich enthaltendem Extrakt, der den gesamten Feststoffanteil aus Phosphat und Netzmittel und in der Weiterbildung auch Schauminhibitor enthält. Dieser Extrakt lässt sich wesentlich besser transportieren als das einsatzfertige Brandschutzmittel. Dieses wird bei Löscharbeiten am Einsatzort durch Zumischung von Wasser hergestellt. Auch bei einer Brandschutzausrüstung von Gegenständen wird vorzugsweise am Einsatzort der Extrakt mit der passenden Menge an Wasser verdünnt, sodass das einsatzfertige Brandschutzmittel erhalten wird. Es ist aber auch möglich, kleinere Mengen einsatzfertig abzupacken, beispielsweise Sprühdosen mit dem erfindungsgemäßen Brandschutzmittel einsatzfertig zu füllen, so dass kleinere Arbeiten zur Feuerschutzausrüstung, beispielsweise in einer Wohnung und um ein Beispiel zu geben, die Ausrüstung eines Weihnachtsbaums, eines Adventskranzes, eines Kleidungsstücks, einer Holztreppe usw. direkt und unmittelbar vorgenommen werden können.

Gegenstände, die mit dem erfindungsgemäßen Brandschutzmittel behandelt sind und auf diese Weise feuerhemmend ausgerüstet sind, zeigen auf ihrer Oberfläche eine feine Versiegelungsschicht. Diese kristallisiert nicht aus. Auf die Schicht können ohne Probleme Farben und Lacke aufgetragen werden, die Schicht ist farblos, geruchsfrei und giftklassenfrei. Das erfindungsgemäße Brandschutzmittel kann daher auch auf Gegenstände aufgebracht werden, mit denen man in Kontakt kommt, beispielsweise Vorhänge, Fastnachtsartikel, Teppiche, Holztreppen usw.. Bei Textilien hält die Versieglung bis zum nächsten Waschvorgang. Sie muss dann wiederholt werden. Bei Hölzern lässt sich eine zeitlich recht lange Versiegelung erreichen. Entsprechendes gilt für andere, brennbare Gegenstände. Eine Auffrischung im Jahresrhythmus ist empfehlenswert.

Nachfolgend werden einige Rezepte, die nur beispielhaft zu verstehen sind, aufgeführt, um die Zusammensetzung des erfindungsgemäßen Brandschutzmittels zu veranschaulichen:
1. Rezept: Vermischt wird ein Feststoffanteil von 38 Gewichts-Prozent mit 62 Gewichts-Prozent Wasser. Der Feststoffanteil hat folgende Zusammensetzung:

| | |
|---|---|
| 97,9 | Gewichts-Prozent Diammoniumphosphat |
| 2,0 | Gewichts- Prozent Silikonentschäumer, wässrig, ca. 38 Gewichts-Prozent Feststoffgehalt und |
| 0,1 | Gewichts-Prozent eines kationischen oder anionischen Tensids. |

Bewährt haben sich auch Mischungen verschiedener Phosphatsalze, so kann beispielsweise der angegebene Anteil an Diammoniumphosphat ersetzt werden durch 2 / 3 Diammoniumphosphat und 1/3 Guanidinphosphat oder 1/3 Diammoniumphosphat, 1/3 Guanidinphosphat und 1/3 Dimelaminphosphat.
2. Rezept: 18 Gewichts-Prozent Feststoffanteil werden mit 82 Gewichts-Prozent Wasser vermischt. Der Feststoffanteil setzt sich zusammen aus

| | |
|---|---|
| 98,8 | Gewichts-Prozent Guanidinphosphat |
| 1,0 | Gewichts-Prozent Aluminiumstearat und |
| 0,2 | Gewichts-Prozent Natriumsulfat. |

3. Rezept: Es wird ein Extrakt hergestellt aus 38 Gewichts-Prozent Feststoffanteil und 62 Gewichts-Prozent Wasser, der Feststoffanteil besteht aus

| | |
|---|---|
| 98,9 | Gewichts-Prozent Diammoniumphosphat |
| 0,9 | Gewichts-Prozent Silikonentschäumer und |
| 0,2 | Gewichts-Prozent eines Tensids. |

Dieser Extrakt wird am Einsatzort so verdünnt, das auf ein Teil Extrakt drei bis vier Teile Wasser kommen. Das erhaltene Brandschutzmittel wird dann praktisch eingesetzt, beispielsweise als Löschflüssigkeit.

Im folgenden werden einige Beispiele wieder gegeben, die die Anwendung des erfindungsgemäßen Brandschutzmittels zeigen:
1. Beispiel: Ein aufgeschichteter Stapel trockenes Holz mit etwa 1m3 Volumen wurde mit dem Brandschutzmittel gemäß Rezept 1 behandelt. Das Brandschutzmittel wurde mit einer Zerstäuberspritze, wie sie auch als Giftspritze im Garten benutzt wird, aufgetragen. Es wurde ein feiner Nebel erreicht, der sich auf das Holz nieder senkte. Es wurde bei sonnigem warmem Wetter, Umgebungstemperatur etwa 22°C, zwei Stunden gewartet. Anschließend wurde versucht, den Stapel mit einem Bunsenbrenner an zu zünden. Der Stapel ließ sich nicht in Brand setzten. Sobald der Bunsenbrenner vom Holzstapel weggezogen wurde, erlosch ein lokal entfachtes Feuer rasch.
   Durch die Versieglung der Oberfläche des Holzes erstickte das Feuer, das in unmittelbarer Nähe der Flamme des Bunsenbrenners entstanden war, rasch wieder. Zudem konnten die schwarz gewordenen, verbrannten Stellen kurzfristig nach Erlöschen wieder mit dem Finger angefasst werden. Die ausgelöste Kälteeinwirkung hat dem entfachten Feuer sofort so viel Wärme entzogen, dass es erlosch. Die angezündeten Holzteile waren nur schwarz und leicht verkohlt. Teils waren Glutspuren zusehen, welche aber relativ rasch wieder angefasst werden konnten. Das unter unmittelbarere Wirkung der Flamme des Bunsenbrenners angesengt Holz war im Innern noch intakt.
   Das trockene Holz konnte noch ohne Veränderung von Hand gebrochen werden. Die Plastizität war nicht verändert. Beim Bruch kam es zu einem deutlichen Bruchgeräusch, einem Knall.
   Bei diesem Versuch wurde lediglich die Oberfläche des Holzstapels besprüht. Die im Inneren des Holzstapels befindlichen Holzteile konnten beim Besprühen nicht erreicht werden.
2. Beispiel: Als Kontrollversuch wurde ein gleichgroßer Holzstapel entsprechender Zusammensetzung aufgeschichtet und mit dem Bunsenbrenner angezündet. Der Stapel ließ sich relativ rasch entzünden, brannte nach kurzer Zeit. Nach etwa 45 min. war der Holzhaufen verbrannt, die Glut hatte den Untergrund versenkt, der Untergrund bestand in diesem Falle aus Erde. Diese war mit Asche bedeckt. Die Asche war nach dem Brand etwa 70°C warm.
   Es wurde nun das erfindungsgemäße Brandschutzmittel entsprechend Rezept 2 auf die noch warme Asche aufgesprüht. Dabei entstand eine Rauchsäule. Ein Rest an Glut war sofort erloschen und die Asche konnte nach kurzer Zeit, innerhalb weniger Minuten, mit dem Finger angefasst werden.
   Auch hier entstand durch Aufsprühen des erfindungsgemäßen Brandschutzmittels als Löschflüssigkeit sofort eine intensive Benetzung, die Glut wurde rasch gelöscht. Durch die erfindungsgemäße Kälteerzeugung kühlte sich die Restglut sehr schnell ab. In relativ kurzer Zeit, etwa nur einer Minute, war die Asche nur noch 32°C warm.
3. Beispiel: Ein bereits leicht vertrockneter, 50 cm hoher Tannenbaum (Weißfichte) wurde von allen Seiten mittels einer Unterdrucksaugspritze mit dem Brandschutzmittel gemäß Rezept 1 eingesprüht. Er wurde im Inneren eines Gebäudes bei einer Zimmertemperatur von etwa 21°C während 24 Stunden getrocknet. Der Baum hatte nach dieser Zeit keine Farbveränderung, es war keine Auskristallisierung eines Salzes zu erkennen. Der typische Tannenbaumgeruch war durch das Aufbringen des Salzes nicht beeinträchtigt.
   Es wurde nun versucht, den Baum mit einem Bunsenbrenner zu entzünden. Auch hier wurde in unmittelbarem Kontakt mit der Flamme des Bunsenbrenners ein Brand des Baums erreicht, der Brand erlosch aber sofort wieder, wenn der Bunsenbrenner entfernt wurde. Zurück blieb ein verkohlter Ast ohne Nadeln. Die Brandstelle war schwarz und bis auf etwa 1/3 des verbliebenen Holzes verglüht. Die Brandstelle konnte rasch nach Erlöschen der Flamme angefasst werden.
   Der gleiche Baum wurde dann im Freien in die Erde gesteckt und dem Wetter ausgesetzt. Nach drei Wochen im Feien darunter einige Tage mit Regen, wurde wiederum versucht, den Baum zu entzünden. Einige inzwischen braun und trocken gewordene Nadeln ließen sich rasch entzünden und verbrannten. Noch grüne Nadeln waren aber ausreichend fest mit den Ästen verbunden und ließen sich, solange sie in unmittelbarem Kontakt mit der Flamme der Bunsenbrenners waren, relativ rasch, teilweise explosionsartig, verbrennen. Zog man aber die Brennerflamme wieder zurück, kam das Feuer im Baum sofort zum Erliegen. Bei Versuchen an mehreren Stellen des Tannenbaums stellte man zwar fest, dass auch nach Wegziehen des Bunsenbrenners noch ein leichtes Nachbrennen festzustellen war, auch dieses kam aber nach einiger Zeit zum Ende, ein richtiger Brand wurde nichtbeobachtet. Typischerweise erloschen die Flammen nach etwa 45 sek., spätestens aber wenige Minuten nach Wegziehen des Bunsenbrenners. Es hinterblieben schwarze, leicht verkohlte Reste, die aber nicht selbst vom Baum fielen.
4. Beispiel: Eine Mischung aus Papier, Karton und Holzwolle wurde mit einem Nebel aus Brandschutzmittel gemäß Rezept 1 eingesprüht und bei normaler Raumtemperatur getrocknet. Anschießend wurde versucht, mit einem Zündholz oder einem Feuerzeug diese Mischung in Brand zusetzen. Dies gelang nicht. Die Holzwolle rauchte, das Feuer erlosch, es war auch hier ein deutlicher Kühleffekt festzustellen.
5. Beispiel: Gewebe aus Baumwolle und Kunstfaser wurden mit einem Brandschutzmittel gemäß Rezeptur 1 in feinem Nebel eingesprüht. Danach wurde ausreichend getrocknet, so dass sich das Gewebe wieder so trocken wie vor dem Aufbringen des Brandschutzmittels anfühlte. Es wurde versucht, die Gewebe mit einem Bunsenbrenner anzuzünden. Erst nach extrem langer Zeit wurde ein leichtes Schmoren festgestellt. Die Gewebe wurden schwarz und zerfielen unter Feuereinwirkung.

Wird Benzin auf die Gewebe aufgetragen und angezündet, kommt es sofort zum Feuer, der Brand hält so lange an, bis das Benzin verbrannt ist. Das Gewebe selbst wurde nicht vom Feuer versengt. Auch hier konnte nach Erlöschen des Benzinbrandes das Gewebe sofort angefasst werden.

In einer Verbesserung kann dem erfindungsgemäßen Brandschutzmittel noch ein Glanzverstärker, insbesondere ein Silikon, wie es auch für Haarglanz eingesetzt wird, beigefügt werden. Dadurch wird die Brandschutzschicht glänzend.

## Patentansprüche

1. Brandschutzmittel zum Aufbringen auf Gegenstände, insbesondere zellstoffhaltige Gegenstände, wie z.B. Holz, in Form einer wässrigen Lösung mit mehr als 50 Gewichtsprozent Wasser eines Phosphats und eines Netzmittels, **dadurch gekennzeichnet, dass** die wässrige Lösung zusätzlich einen Schauminhibitor aufweist.

2. Brandschutzmittel nach Anspruch 1, **dadurch gekennzeichnet, dass** die wässrige Lösung zusätzlich 0,1. bis 5 Gewichtsprozent, bezogen auf den Anteil an Phosphat, des Schauminhibitors aufweist.

3. Brandschutzmittel nach Anspruch 1, **dadurch gekennzeichnet, dass** das Netzmittel in einem Gewichtsanteil von 0,01 bis 1 Prozent bezogen auf den Anteil an Phosphat in der wässrigen Lösung enthalten ist.

4. Brandschutzmittel nach Anspruch 1, **dadurch gekennzeichnet, dass** der Anteil an Phosphat zwischen 5 und 38 Gewichtsprozent, vorzugsweise zwischen 10 und 22 Gewichtsprozent, insbesondere etwa 16 Gewichtsprozent beträgt.

5. Brandschutzmittel nach Anspruch 1, **dadurch gekennzeichnet, dass** Phosphat ein Metallphosphat, Ammonium- und/oder Aminphosphat ist.

6. Brandschutzmittel nach Anspruch 1, **dadurch gekennzeichnet, dass** das Netzmittel ein anionisches oder kationisches Tensid und/oder ein Natriumsulfat ist.

7. Brandschutzmittel nach Anspruch 2, **dadurch gekennzeichnet, dass** der Schauminhibitor ein Silikonschauminhibitor und/oder ein Stearat ist.

8. Verwendung eines Brandschutzmittels nach Anspruch 1 als Löschwasser zum Auftragen auf bereits brennende Gegenstände.

9. Verwendung eines Brandschutzmittels nach Anspruch 1 zum Auftragen auf brennbare Gegenstände.

10. Brandschutzmittel nach Anspruch 1, **dadurch gekennzeichnet, dass** sich das Phosphat von Orthophosphorsäure, Pyrophosphorsäure, Polyphosphorsäure, phosphoriger Säure oder Phosphinsäuren ableitet.

11. Brandschutzmittel nach Anspruch 1, **dadurch gekennzeichnet, dass** als Phosphat ein Diammoniumphosphat, Diammoniumhydrogenphosphat, Guadeninphosphat, Dimelaminphosphat, Bohrphosphat, Dinatriumphosphat, Kupferhydroxidphosphat oder eine beliebige Kombination dieser Phosphate eingesetzt wird.

## Claims

1. A fire retardant for applying to objects, in particular to cellulose containing objects such as wood, in the form of an aqueous solution having more than 50 weight percent of water of a phosphate and of a surfactant, **characterized in that** the aqueous solution additionally comprises a foam inhibitor.

2. The fire retardant as set forth in claim 1, **characterized in that** the aqueous solution additionally comprises 0.1 to 5 weight percent of the foam inhibitor, based on the fraction of phosphate.

3. The fire retardant as set forth in claim 1, **characterized in that** the surfactant is contained in the aqueous solution in a weight proportion of 0.01 through 1 percent, based on the fraction of phosphate in the aqueous solution.

4. The fire retardant as set forth in claim 1, **characterized in that** the fraction of phosphate ranges between 5 and 38 weight percent, preferably between 10 and 22 weight percent, and is in particular about 16 weight percent.

5. The fire retardant as set forth in claim 1, **characterized in that** phosphate is a metal phosphate, ammonium and/or amine phosphate.

6. The fire retardant as set forth in claim 1, **characterized in that** the surfactant is an anionic or cationic surface-acting agent and/or a sodium sulfate.

7. The fire retardant as set forth in claim 2, **characterized in that** the foam inhibitor is a silicone foam inhibitor and/or a stearate.

8. Use of a fire retardant as set forth in claim 1 as fire-fighting water for applying to already burning objects.

9. Use of a fire retardant as set forth in claim 1 for applying to inflammable objects.

10. The fire retardant as set forth in claim 1, **characterized in that** the phosphate is derived from orthophosphoric acid, pyrophosphoric acid, polyphosphoric acid, phosphorous acid or phosphine acids.

11. The fire retardant as set forth in claim 1, **characterized in that** a diammonium phosphate, a diammonium hydrogen phosphate, a guanidin phosphate, a dimelamine phosphate, a boron phosphate, a disodium phosphate, a copper hydroxide phosphate or any combination of these phosphates is used as the phosphate.

## Revendications

1. Agent d'ignifugation destiné à être appliqué sur des objets, en particulier sur des objets contenant de la cellulose, tels que le bois, sous forme d'une solution aqueuse à plus de 50 % en poids d'eau d'un phosphate et d'un agent mouillant, **caractérisé par le fait que** ladite solution aqueuse présente en sus un inhibiteur de mousse.

2. Agent d'ignifugation selon la revendication 1, **caractérisé par le fait que** ladite solution aqueuse présente en sus entre 0,1 et 5 % en poids, par rapport à la teneur en phosphate, de l'inhibiteur de mousse.

3. Agent d'ignifugation selon la revendication 1, **caractérisé par le fait que** le pourcentage en poids dudit agent mouillant contenu dans la solution aqueuse est compris entre 0,01 et 1 par rapport à la teneur en phosphate.

4. Agent d'ignifugation selon la revendication 1, **caractérisé par le fait que** la teneur en phosphate est comprise entre 5 et 38 % en poids, de préférence entre 10 et 22 % en poids, en particulier elle est de 16 % en poids à peu près.

5. Agent d'ignifugation selon la revendication 1, **caractérisé par le fait que** le phosphate est un phosphate de métal, un phosphate d'ammonium et/ou d'amine.

6. Agent d'ignifugation selon la revendication 1, **caractérisé par le fait que** ledit agent mouillant est un tensioactif anionique ou cationique et/ou un sulfate de sodium.

7. Agent d'ignifugation selon la revendication 2, **caractérisé par le fait que** ledit inhibiteur de mousse est un inhibiteur de mousse de silicone et/ou un stéarate.

8. Utilisation d'un agent d'ignifugation selon la revendication 1 en tant qu'eau d'extinction destinée à être appliquée sur des objets déjà en flammes.

9. Utilisation d'un agent d'ignifugation selon la revendication 1 pour l'application sur des objets combustibles.

10. Agent d'ignifugation selon la revendication 1, **caractérisé par le fait que** le phosphate est dérivé de l'acide orthophosphorique, de l'acide pyrophosphorique, de l'acide polyphosphorique, de l'acide phosphoreux ou des acides phosphiniques.

11. Agent d'ignifugation selon la revendication 1, **caractérisé par le fait que** l'on utilise en tant que phosphate un phosphate de diammonium, un phosphate d'hydrogène de diammonium, un phosphate de guanidine, un phosphate de dimélamine, un phosphate de bore, un phosphate de disodium, un phosphate d'hydroxyde de cuivre ou une combinaison quelconque de ces phosphates.
